**Europäisches Patentamt**

**European Patent Office**

**Office européen des brevets**

(19)

(11) **EP 1 411 242 A1**

(12) **EUROPEAN PATENT APPLICATION**
published in accordance with Art. 158(3) EPC

(43) Date of publication:
**21.04.2004 Bulletin 2004/17**

(51) Int Cl.⁷: **F03D 3/04**

(21) Application number: **02724088.6**

(22) Date of filing: **10.04.2002**

(86) International application number:
**PCT/CN2002/000251**

(87) International publication number:
**WO 2002/084115 (24.10.2002 Gazette 2002/43)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.04.2001 CN 01110573**

(71) Applicant: **Huang, Chienwen**
**Zhong-Li City, Tao-Yuan Xian (CN)**

(72) Inventor: **Huang, Chienwen**
**Zhong-Li City, Tao-Yuan Xian (CN)**

(74) Representative: **Prentice, Raymond Roy**
**Calvert's Buildings,**
**52B Borough High Street**
**London SE1 1XN (GB)**

(54) **THE METHOD OF WIND-COLLECTING POWER GENERATION AND ITS EQUIPMENT**

(57)     A wind-collecting device of the power generation tower (20) is used to guide and accumulate airflow, and augment airflow rotation force and the arm of rotation force acted on the wind wheel (50) to improve the power output. The guiding device is used to minish air resistance acted on the wind wheel (50) that is against the wind; and empennage device is used to adjust automatically wind-collecting direction. The wind-collecting device (10) is of arbitrary shape, and can be moved, rotated or shape-changed, and its inlet (11) transverse section area is greater than the outlet (12) one, so strong airflow can still be generated at the outlet (12) to drive the wind wheel (50) on the power generation tower (20) under puny natural airflow. One kind of the power generation tower (20) is fixed type; the other one can be moved from one place to another. The axis of the tower (20) is perpendicular to the ground. The tower (20) has a rotating curved surface or a cylindrical surface, and the electric power is generated by the rotation of couples of or hundreds of wind wheel (50)s installed flatly on the tower (20) from the top down.

FIG. 6

## Description

The present invention relates to the method and equipment of wind power generation, especially in the wind power accumulating power generation method and equipment.

Many conventional power generating ways, such as fuel power generation by coals, oils and gases, nuclear power generation, etc. pullets environment greatly. Moreover, nuclear power generation has safety consideration and thus cannot be accepted by people. Waterpower generation has limited natural resource. Most of usable waterpower resources are developed. To have more power to provide for human, many new power generation ways, such as by wind, solar energy, sea water, etc. are developed.

In 1920 ages, wind wheels are used in power generation. In 1931, a wind power generator of 100KW is built in the Crimean Balaclava, Soviet Union, this is an earliest wind power generator. According to the data of German, at the end of 2000, there are 9375 wind power generators are installed, which generates 6113 MW, occupying 2.5% of power production in German in that year. Moreover, in that year, the wind power generators in German are grown from 1496 to 1668.

Most of the conventional wind power generator is installed vertically and the axial center of the rotary shaft faces the direction of horizontal airflow. Most of the wind power generators use natural airflow to actuate fan. Then gears in gearbox change the speed so that the power generator on the wheel axis generates power. The conventional blade-type horizontal axial wind power generation has the following defects.

1. The cross section of airflow for the blade-type wind power turbine to receiving wind power is finite, so that the power generated is finite.

2. The maximum efficiency of a conventional wind power turbine is only 59.26%.

3. The friction loss of gearbox is large.

4. The larger conventional blade-type wind power turbine structure is easily damaged by hurricane.

5. If wind power is smaller, the power generation is confined.

6. A larger cross section of airflow is necessary.

7. When wind is weak, the fans cannot be actuated.

8. The air resistances of the blades are proportional to the two orders of the rotation speed and thus the output power is confined.

9. The fan cannot rotate steadily due to the boundary layer effect of the ground.

10. Since a large cross section of airflow is necessary and thus a large amount of money is necessary for building structure foundation

11. Large noise generates when fans rotate.

Due to above defects, the conventional wind power generator has a low economic efficiency, and the wind power generation cannot be widely accepted by people.

Conventionally, wind power generators use natural airflow to drive fan to generate power. To increase power generator efficiency, the cross section of airflow of the wind wheel and fan is increased. Thereby, the radius of the fan is larger and larger and the supported structure is also larger and larger. Thus the cost in the foundation is increased, but the power generation is limited. By the boundary layer effect of airflow, the horizontal speed of wind is varied with elevation and the wind speed is changed irregularly. When the larger scale fan rotates, an unbalance force will acting to the fan, so that the structure of the fan is damaged. When the conventional fan rotates with a high speed, the gearbox is easy to generate high temperature and the blades are easy to be damaged. Thus, the fans must be cut-off.

By the experiences from the global practices, in the conventional wind power generator with horizontal axial blades, the wind power generators with two blades have a higher mechanical efficiency with output coefficients greater than 0.40 to 0.47. This high speed wind wheel has a high specific speed. The air resistance as the blade rotates in high speed is positively proportionally to the square of the rotation speed of tangent direction. If the natural wind speed is 12 - 17 meters per second, the rotation speed of the blade will be near one half of sound speed. Thereby, air resistance is large and output power will achieve a maximum value, which is called as a device capacity. When the natural wind speed is over 12 to 17 meters per second, the power generation is not increased with the wind speed, but the output power is reduced or remained no changed. If the natural wind speed is 25 - 30 meters per second, the rotation speed of the blade will be near sound speed. Since the area of blade and air resistance of the blade is large, a too larger air resistance will induce the turbine to cutoff.

Besides, according to the fluid dynamics, the limit efficiency of the conventional horizontal axial wind power generator is 59.26%, but because the power loss as wind power is converted into electric power, the practical efficiency is at most 47%.

From above description, the power efficiency of wind power generator is positively proportional to the three orders of the speed of air applied to the wind wheel or fan. Thereby, the effective way to improve power generation is to increase the air speed applied to the wind wheel or fan. Since the power generation of the wind power generator is positively proportionally to the rotary torque of the wind wheel and the torque is positively proportional to the force and arm of force, to increase the power generation it is necessary to increase the force applied and arm of force.

Conventionally the resistance of the conventional blades is increased with the square of the rotation speed. After the wind speed is over a satisfactory wind speed, the fan will generate a great air resistance. Because the air resistance is larger than the rotation force, the output power will reduce instead of increasing. If it is desired to increase the airflow speed applied to the wind wheel or fan for increasing the power generation, a wind wheel system and induction power generator completely different from the conventional structures must be produced. Moreover, a method and device for controlling the wind wheel and driving the airflow are necessary. Besides, since when air rubs blades, vibration occurs so that noise is generated. When the air resistance is increased greatly, noise will also increase. Thereby, a novel low air resistance wind wheel device must be developed for replacing the conventional blades and overcoming the problem of noises. To reduce the wind speed necessary for actuating the wind wheel so as to increase the power generation, a novel wind power accumulator and power generating tower are necessary for accumulating the mass, power and momentum of the airflow so as to increase the speed and force of the airflow applied to the wind wheel. Thereby, even the strength of air is weak, the wind wheel device can be operated. A wind power accumulating device is used for increasing the airflow on the wind wheel or a power generating tower is necessary for guiding the airflow. To avoid the edge effect, the wind power generating tower is necessary. Furthermore, to avoid the limitation of 59.26% of power efficiency, a novel wind wheel system is necessary. To cause the output power to be positively proportional to the three orders of the wind speed in hurricane, a low air resistance wind wheel system is necessary for reducing the air resistance when wind wheel rotates in high speed. To reduce the air resistance when the wind turbine rotates reversely to the wind speed, a flow guide device is used to shield natural airflow. A tail is used to change the direction of the wind by the wind power accumulating device, power generating tower and the flow guide device. The tail can be used to rotate a supporting system. The wind power accumulating power generating method and device of the present invention is invented by fluid dynamic principle.

Accordingly, the aim of the present invention is to provide a wind power accumulating power generating method and device for accumulating large wind power so as to adjust the direction of wind and the cross section for receiving wind so as to control the power generation.

Another aim of the present invention is to provide a wind power accumulating power generating method and device with a larger wind accumulating area.

Another aim of the present invention is to provide a wind power accumulating power generating method and device with a lower mechanic friction loss.

Another aim of the present invention is to provide a wind power accumulating power generating method and device which can avoid the damage from wind hurricane.

Another aim of the present invention is to provide a wind power accumulating power generating method and device which can generate strong airflow even the natural airflow is weak so as to retain the rotation of the wind turbine.

Another aim of the present invention is to provide a wind power accumulating power generating method and device with a lower air resistance and large power generation ability and high efficiency.

Another aim of the present invention is to provide a wind power accumulating power generating method and device, wherein the boundary layer effect of the ground is considered into the design of the method and device.

Another aim of the present invention is to provide a wind power accumulating power generating method and device which provide a vertical shaft and a tail for adjusting the wind accumulating direction.

Another aim of the present invention is to provide a wind power accumulating power generating method and device with a power efficiency larger than 59.26%.

It is known from fluid dynamic that the power efficiency of a wind power generator is positively proportional to the density of the wind power, and the wind receiving areas of the wind wheels or fans and is positively proportional to the three orders of the airflow speed. The power of the wind power generator is positively proportional to the torque of the wind wheel or fan. Therefore, there are several ways for increasing power efficiency of the wind wheel or fan.

1. To increase the density of air, but this is very difficult.

2. To increase the airflow cross section of the wind wheel or fan, this is used in the conventional wind power generators.

3. A negative pressure is applied to the backside of the wind wheel or fan, this is used to current wind power generators. This is used in the present invention and is also an effective method.

4. The air speed on the wind wheel or fan is increased so as to increase the force applied to the wind wheel device is increased. This is used in the present invention and is also an effective method.

5. The natural airflow is guided to enlarge the rotational arm of force applied to the wind wheel device. This way is used in the present invention so as to increase the rotational torque.

6. A flow guide device is used to shield the airflow and to reduce the air resistance as the wind wheel rotates along a reverse direction of the wind flow. This is used in the present invention.

7. Low air resistance wind turbine device and wind power reflector device are used to reduce the air resistance as the wind turbine rotates. This is used in the present invention.

8. The mechanical resistance from other factors is reduced, for example, not to use a gearbox. This is used in the present invention.

9. The wind turbine device is designed based on impulse turbine theory so that the mechanical efficiency is not confined by 59.26 %. This is used in the present invention.

The present invention relates to a method and device for generating power by wind, wherein a wind turbine device pivotally installed to a supporting shaft of a power generating tower. The supporting shaft is a hollow or solid shaft. The supporting shaft is perpendicularly to the ground. If the supporting shaft is hollow, the hollow portion can be passed by power wires. The wind turbine device is formed by a plurality of spoon-like devices which are annularly arranged, or the wind turbine device has a plurality of wind power reflector which are annularly arranged on a supporting device. The spoons or the wind power reflector supporting devices or a shaft of the wind power turbine device are installed with power generators. When the wind turbines rotate, power is generated.

The present invention is realized by the following ways.

1. A wind turbine device or a power generating tower structure are used to collect wind power so that the density and speed of the wind increase dramatically. Then, by the guiding of the wind-collecting device and power generating towers, the airflow is concentrated at the wind power reflector at the edge of the wind power turbine device. Not only the wind force applied to the wind power reflector device is increased. Moreover, the rotation force applied to the wind power turbine device is enlarged. Thereby, a larger rotation torque is acquired. Moreover, the wind turbine device pivotally installed to the power generating tower can rotate rapidly. Then strong induced current is generated by power generators so that the power generation is increased dramatically.

2. The wind turbine device is design by impulse turbine theory. A tail of the wind power reflector of the wind turbine device is installed with concave smooth groove and hole so that air flows impacting into the concave hole or groove will reflecting back so as to have a larger momentum. Thus the wind turbine device has a great reaction. Thereby, a great rotation torque is acquired. Then by a power generator, a larger power is generated. Thus the mechanical efficiency of the present invention can be over 59.26% .

3. The wind turbine device of the present invention has a lower air resistance. The air resistance as the wind turbine rotates is reduced. The wind power reflector has a shape selected from one of a bullet type with a tail end which has a semispherical concave hole, a concave plate, a curved vane, a concave semi-cone shape, a concave pyramid-shape shell, a concave cone-shape shell, a dome-shape shell, a semi-cylindrical shape, a curved shell shape, a angle-shape plate, and a spiral-shape. In operation, the air resistance of the wind turbine is smaller. Thereby, as the wind is very great, the output electric power is positively proportional to the three orders of the natural wind speed.

4. A flow guide device is installed in the front side of the power generating tower for shielding airflow so as to reduce the air resistance with the wind turbine rotates reverse to the direction of the wind.

5. The axis of the wind turbine device is collinear with the axis of the power generating tower and is vertical to the ground. Each power generating tower is pivotally installed with a plurality of horizontal wind turbine devices. Each wind turbine device can rotate independently by the driving of airflow so as to meet the boundary layer effect of the ground.

6. A tail and a rotationable supporting system are used. A power generator is installed on the supporting system. The supporting system can automatically adjust the wind power accumulating direction.

7. A plurality of power generators of lower rotational speed and larger magnetic flux variation are used to replaced one high rotational speed and small magnetic flux variation power generator. The power generator rotates with the wind turbine device and is cooled by air so as to output large power. Each wind turbine device has different rotation speed so that irregular vibration or instability will not occur.

8. A lower resistance high speed bearing is used to pivotally install the wind turbine device to the power generating tower. The magnetic pole set or the loop induction unit of the power generating tower is directly installed to the wind turbine device. When the wind turbine device rotates, power is generated by magnetic induction. Not only no problem of mechanic friction loss of the gear box, but also the high temperature problem of the gear box in high speed operation is avoided.

9. The low air resistance wind turbine device causes that even in high speed rotation, the wind turbine device of the present invention has no noise so that the noise from blades device is avoided.

The following way can be used to realize the present invention.

(1) There are two power generating towers, a first power generating tower and a second power generating tower. Each power generating tower has a wind turbine device and a power generator. The wind turbine device is pivotally installed to a respective power generating tower; the power generator is installed to the respective wind turbine device and the power generating tower. When the wind turbines device rotate, induction current is induced. A net distance between the two power generating towers is not over twice of the diameter of each wind turbine. A funnel shape air flow channel is formed between the two power generating towers so that the two power generating towers have a function of accumulating wind power as a virtual wind-collecting device. The wind turbine devices on the two power generating towers are arranged symmetrically at two sides of the two power generating towers; when the wind turbines are blown by airflow, the wind turbines rotate clockwise or counterclockwise with the direction of airflow so that the power generators generate current by magnetic induction. If one of the power generating tower is moved, then the flow speed in the air flow path is controllable so as to control power generation.

(2) In above section (1), a supporting system has a tail device; wind power applied to the tail device rotates the supporting system so that the wind power accumulating device or the power generating tower has a preferred location for accumulating wind power.

(3) In above section (2), a wind-collecting device is added. A wind receiving cross section of the wind power accumulating device is larger than a outlet cross section of the wind-collecting device; the wind-collecting device is pivotally installed in front of the power generating tower so that the wind outlet of the wind-collecting device is near the funnel air flow channel of the two power generating towers so as to increase the wind power on the wind turbine device. The airflow speed at the wind outlet of the wind-collecting device will control the power generation. When wind is applied to the tail, the wind power accumulating direction of the power generating tower is changeable.

(4) In the section (2), flow guide device is added for guiding airflow and shielding airflow of the wind turbine device for reducing air resistances of areas resisting the rotation of the wind turbine device when the wind turbine device rotates. The flow guide device is added in front of the power generating towers at a side blown by wind. When wind is applied to the tail, the wind power accumulating direction of the power generating tower is changeable.

(5) A wind power accumulating device is added to a rotationable supporting system with a tail. A wind receiving cross section of the wind-collecting device is larger than a outlet cross section of the wind-collecting device for accumulating wind power. Moreover, a power generating tower, a wind turbine device, and a power generator are installed. The wind turbine device is pivotally installed to the power generating tower. The power generator is installed on the power generating tower and the wind turbine device, respectively. When the wind turbine device rotates, induction current generates. The power generating tower is installed on the wind outlet of the wind-collecting device. The airflow at the outlet serves to drive the wind turbines on the power generating tower to rotate for generating power. The strength of the airflow at the outlet of the wind-collecting device is controlled for controlling power generation. When wind is applied to the tail, the wind power accumulating direction of the power generating tower is changeable.

(6) A wind-collecting device, a power generating tower, a wind turbine device, and a power generator are installed on the rotationable supporting system with a tail. The wind turbine device is pivotally installed on the power generating tower. The power generator can installed on the wind turbine device and the power generating tower, respectively. When the wind turbine device rotates, induction current generates. The wind-collecting device is installed at front side of the power generating tower. A tapered trumpet airflow channel is installed between the wind-collecting device and the power generating tower so as to colleting wind power. The airflow in the airflow channel serves to drive the wind turbine in the power generating tower to rotate. The strength of the airflow at the outlet of the wind-collecting device is controlled to change the wind power. When wind is applied to tail, the direction of the wind is changeable.

(7) In above (6), a flow guide device is added. A power generating tower, a wind turbine device, and a power generator are installed on the rotationable supporting system with a tail. The wind turbine device is pivotally installed on the power generating tower. The power generator can be installed on the wind turbine device and the power generating tower, respectively. When the wind turbine device rotates, induction current generates. The wind-collecting device is installed at front side of the power generating tower. A tapered trumpet airflow channel is installed between the wind-collecting device and the power generating tower so as to colleting wind power. The airflow in the airflow channel serves to drive the wind turbine in the power generating tower to rotate. The strength of the airflow at the outlet of the wind-collecting device is controlled to change the wind power. The flow guide device is installed in front of the power generating tower at a side blown by air. When air is applied to the tail, the direction of wind power accumulating is changeable.

(8) There are two power generating towers, one wind turbine device, and one power generator. The wind turbine device is pivotally installed to a respective power generating tower; the power generator is installed to the respective wind turbine device and the power generating tower. When the wind wheels rotate, induction current is induced. A net distance between the two power generating towers is not over twice of the diameter of each wind turbine. One power generating tower is fixed and another one is fixed to a movable base. A funnel shape air flow channel is formed between the two power generating towers so that the two power generating towers have a function of accumulating wind power as a virtual wind-collecting device. The wind turbine devices on the two power generating towers are arranged symmetrically at two sides of the two power generating towers. When the wind turbines are blown by airflow, the wind turbines rotate clockwise or counterclockwise with the direction of airflow so that the power generators generate current by magnetic induction. A wind-collecting device is added to a rotationable supporting system with a tail. A wind receiving cross section of the wind-collecting device is larger than a outlet cross section of the wind-collecting device for accumulating wind power. The wind-collecting device is installed in front of the power generating towers at a side blown by air so that the wind outlet of the wind-collecting device is near the wind inlet of the funnel airflow channel for increasing the wind power accumulating effect. To control the airflow speed of the outlet of the wind-collecting device, the power generation is controlled.

(9) In above section (8), a wind-collecting device is added. A wind receiving cross section of the wind-collecting device is larger than a outlet cross section of the wind-collecting device for accumulating wind power. The wind-collecting device is installed in front of the two power generating towers at the sides blown by air so that the wind outlet of the wind-collecting device is near the wind inlet of the funnel shape airflow channel of the two power generating towers so as to increase the wind power applied to the wind turbine device. The airflow speed at the wind outlet of the wind-collecting device is controlled so as to control the wind power generation.

(10) In above section (8), the present invention is realized to a rotationable supporting system with a tail structure. When wind is applied to the tail, the wind power accumulating direction of the power generating towers is changed.

(11) In above section (9), the present invention is realized to a rotationable supporting system with a tail structure. When wind is applied to the tail, the wind power accumulating direction of the power generating towers is changed.

(12) In above section (10), a flow guide device is added at the front of the two power generating towers at a side reverse to the wind blowing direction for shielding airflow and reducing the air resistance when the wind turbine rotates. When wind applies to the tail, the wind power accumulating direction of the power generating towers is changed automatically.

(13) The present invention can be realized by several groups, each group containing a set of wind power generation system according to the present invention.

In above embodiment, the way for building a wind-collecting device is that: to building a device having a wind outlet and a wind inlet. The cross section of the wind inlet is larger than that of the wind outlet for accumulating the mass, momentum, power of the airflow. The wind-collecting device has a fix or a movable base for changing the wind accumulating direction; cross sections of the wind inlet, wind outlet and shape of the wind-collecting device can be controlled. The cross section of the wind outlet and wind inlet can be closed or opened. By moving, rotating or displacing the wind power accumulating device or to control the shape of the wind-collecting device, the wind power accumulating direction and cross section are changeable so as to control the speed of the driving airflow in the wind outlet. By changing the cross section of the wind outlet, the speed of the airflow in the wind outlet is changed. Above mentioned methods can be performed singly or combined for achieving the aim of adjusting power generation.

Besides, in the present invention, a supporting device between power generating towers is constructed. The length of the supporting device is fixed or telescopic for changing the distance between the two power generating towers and adjusting the airflow speed between the two power generating towers so as to adjust the power generation. Since the airflow between the power generating towers is quicker, a larger lateral pressure is generated due to the structures of the wind turbine device and the power generating towers, the supporting device between the two power generating towers will resist this lateral pressure, we call Magnus effect.

The power generating tower according to the present invention has a supporting shaft vertical to the ground. A plurality of wind turbine devices is installed on the power generating tower. The axis of the each wind turbine device is collinear to the axis of the power generating tower. When one of the wind turbine device is necessary to the maintained, the brake of the wind turbine can be actuated for stopping the motion of the wind turbine. When a huge wind blow, all the wind turbine devices of one power generating tower can be braked and the power generating tower is moved to the backside of another fixed type power generating tower so as to avoid the wind turbine to rotate too quick so as to overpower to damage the whole power generation system.

Above wind turbine device is completely different from the convention fan structure. The wind turbine device of the present invention uses impulse turbine theory to match the structure of the power generating towers so as to generate a novel wind turbine system. The wind turbine includes a plurality of wind power reflectors, a plurality of wind power reflector supporting beams, an annular bearing, a first annular beam, a second annular beam, a plurality of supporting wheels, an annular track, a plurality of brakes, and a dust-proof device. The annular bearing is installed on the tower body of the power generating tower so that the axis of the annular bearing is collinear to the axis of the tower body. The wind power reflector is installed to the free end of the supporting beam so that the wind power reflector and the supporting beam is formed as a wind spoon. A plurality of wind spoons are arranged annularly to be pivotally installed to the annular bearing. Two annular beams are installed below each wind spoon. The spoon is fixed to the two annular beams. A plurality of supporting wheels is installed below the first annular beam. The annular track is installed to the power generating tower for supporting the wind turbine device. Another annular beam has no supporting wheel, but a plurality of brakes is installed below this annular beam. If necessary, the brake can be actuated to stop the wind turbine and lock the wind turbine. The axes of the two annular beams, annular tracks, annular bearing, power generating towers are collinear. A tail of the wind-collecting device has a concave smooth hole or groove for reflecting from the impulse of airflow. A head of the wind power accumulator has a tip or tapered wind pierce device for reducing the air resistance in rotating the wind turbine device. The wind turbine used this way has a small specific speed. The similar principle has widely used in water power generation and steam power generation with a mechanic efficiency over 80%, about two or three times of the conventional blade-type wind turbine. A diameter of the wind turbine device is D, a size of the wind power reflector in the radius direction is d, a speed ratio of the wind turbine is Ns, then D/d= (30~90) / Ns, Ns is between 2-6, Ns is a ratio of the wind speed to the tangent speed of the wind turbine. Preferably, Ns is between 2 to 3. This wind turbine device is suitable to be installed to a huge wind power generator. Each element can be easy manufactured individually and then is assembled to the power generating tower.

The wind power reflector has a shape selected from one of a bullet type with a tail end which has a semi-spherical concave hole, a concave plate, a curved vane, a concave semi-cone shape, a concave pyramid-shape shell, a concave cone-shape shell, a dome-shape shell, a semi-cylindrical shape, a curved shell shape, a angle-shape plate, and a spiral-shape.; a concave surface of the wind power reflector faces the airflow; and a back side of the wind power accumulator has a needle or a taper tip. Preferably, the wind turbine device 50 is made of titanium alloy, or stainless steel, or carbon fiber, or glass steel, or other high strength corrosion-preventing alloy. Preferably, the wind power reflector 52 has a tail with two symmetrical and smooth cups therein so as to increase the stability. To have a maximum mechanic efficiency, when air flow flushes the two cups at the tail end. In the present invention, the airflow reflect angle is the reflecting angle when air is reflected from the surface of a groove. The wind reflect angle of the airflow is between 120 to 180, preferably, between 173 degrees to 176 degrees. A tail of the wind power reflector of the wind turbine device is installed with concave smooth groove and hole so that air flows impact into the hole or groove will reflect so as to have a larger momentum. Thus the wind turbine device has a great reaction. Thereby, a great rotation torque is acquired. Then a power generator generates a larger power. The backside of a concave hole or groove of the wind power reflector has a tip or tapered wind pierce device. With respect to the tail, the wind pierce device is the head of the wind power reflector. The head of the wind power reflector faces to the rotational direction of the wind power reflector. When the wind turbine rotates, air resistance can be reduced. If bullet type wind power reflector is used and the speed of the wind power reflector is smaller than one half of sound speed, the air resistance of the wind power reflector is reduced to be below the 0.25. If bullet type wind power reflector is used and the speed of the wind turbine is over sound speed, the air resistance of the wind power reflector is reduced to be below the 0.5. If bullet type wind power reflector is used and the speed of the wind turbine is over three times of the sound speed, the air resistance of the wind power reflector is reduced to be below the 0.3. A tail of the bullet type wind power reflector has a semi-spherical concave smooth hole. When airflow impact into the hole, the airflow will reflect. From a large amount experimental data, a semi-spherical concave smooth hole shape structure has an airflow reflecting coefficient of 1.4. Since the action of airflow to the tail of the wind power reflector is always larger than that to the head thereof, when the speed of the wind power reflector is equal to sound speed, the wind turbine will still rotates. The power generator of the present invention still generates large power. The air resistance at the head of the wind power reflector is preferred smaller than 0.4 times of the tail thereof.

In another preferred embodiment of the wind turbine device of the present invention, there are at least two wind power reflectors are annularly arranged, which are installed on the supporting device of the wind power reflector. When in high rotation, the wind turbine device has a preferred stability. The wind power reflector has a shape selected from disk-like shape, round shape, wheel shape, and cylindrical shape. An outer edge thereof has horizontal or vertical annular pieces. Each annular piece is installed with at least two wind power reflectors which are arranged annularly so as to be formed with a wind turbine device. If the annular piece is horizontal, the upper and lower surfaces of the annular piece are installed with respective wind power reflector so that the wind turbine device can be rotated stably. Moreover, dust-proof device can be installed to the vertical annular piece for preventing dust of air from accumulating to the power generator. Two sets of wind power reflectors are annularly arranged and are installed to the annular pieces so as to be formed as a wind turbine device. By the vertical annular pieces, when the wind turbine device rotates, the boundary layer of the wind turbine will move with airflow so as to reduce the resistance on the boundary layer greatly and increase the power generation. This kind wind turbine is suitable to be installed to a middle or small type power generating tower. It is preferably that the wind power reflector supporting device is formed integrally in the plant. Then the wind power turbine is installed to the power generating tower. The wind power reflector has a shape selected from one of a bullet type with a tail end which has a semispherical concave hole, a concave plate, a curved fan, a concave semi-cone shape, a concave pyramid-shape shell, a concave cone-shape shell, a dome-shape shell, a semi-cylindrical shape, a curved shell shape, a angle-shape plate, and a spiral-shape. so as to have a lower air resistance. A tail of the wind power reflector has a smooth concave hole or groove so that air can be reflected, and thus the wind turbine device can get a great impulse. An outer surface of the wind power reflector is smooth and has a low air resistance so that when the wind turbine rotates in a high speed, the air resistance is limited.

Above power generating tower has at least one wind turbine, at least one vertical power generating tower, and at least one power generator. The wind turbine is horizontally arranged to the power generating tower with each wind turbine being horizontally oriented. Each wind turbine can rotate with airflow. The power generator has a magnetic pole set and a coil induction unit. When wind turbine rotates, the coil induction unit will be magnetically induced to generate current.

Moreover, the power generating tower of the present invention has the following features.

1. A bottom of the tower body having a shape selected from one of a cylindrical shape, a rotational parabolic shape; and rotational hyperbolic shape.

2. The power generating tower has at least one dome like or arc shape roof with a lighting arrester.

3. The power generating tower has a elevator inside the tower structure.

4. The power generating tower further comprises a supporting system having a tail wing for change positions for supporting and installing the tower structure. The tail may be a vertical plate, a wind or a canvas shape and a horizontal steady wing can be added.

5. At least one wind-collecting device is installed in front of the power generating tower at a side blown by air. The power generating tower is installed at a wind outlet of the wind power accumulating device; airflow at a wind outlet is applied to the wind power reflectors of the wind-collecting device along a tangent direction of the wind turbine device so as to drive the wind turbines to rotate rapidly so that the power generator generates induced current. the wind-collecting device has a movable base for adjusting a direction of accumulating wind power. The power generating tower further comprises at least one control system for controlling the movable base and adjusting wind power accumulating direction.

6. The power generating tower further comprises at least one control system for performing one of adjusting a cross section of a wind inlet of the wind-collecting device; adjusting a cross section of a wind outlet and changing shape of the wind-collecting device.

7. The power generating tower further comprises at least one flow guide device for guiding airflow and shielding part of wind blowing to the wind turbine device so as to reduce the air resistance which reduce the rotation speed of the wind power accumulating device.

8. There are at least two tower structures. A net distance between the two tower structures is not over two times of a diameter of the tower structure. A funnel shape air flow channel is formed between the two power generating towers so that the two power generating towers have a function of accumulating wind power as a virtual wind-collecting device.

9. At least one supporting device is installed between the two tower structures for resisting the Magnus effect pressure of the tower due to the airflow between the two tower. Length of the supporting device is adjustable for change the distance between the two power generating towers.

10. A movable base is used for bearing one of the two power generating towers so as to change the distance and direction of the two power generating towers.

11. The power generating tower further comprising a movable base for bearing one of the two power generating towers so as to change the distance and direction of the two power generating towers.

12. The power generating tower has a transfer device for transferring the torque force of the wind turbine to the power generator.

13. The power generating tower has a power generator. The power generator has a magnetic pole set and a coil induction unit which are installed to the tower structure and the wind turbine device.

14. The tower body of the power generating tower has a plurality of protruding suspending annular pieces. Every two annular pieces has at least one turbine. The wind turbines are installed horizontally to the supporting shafts of the power generating tower. A plurality of wind turbines is longitudinally on the tower structure. Each wind turbine can rotate with airflow individually to induce current by the power generator.

The way for inducing current by the power generator will be described herein. The power generator of the present invention has a magnetic pole set and a coil induction unit which are installed to a device wind power turbine and a power generating tower, a transfer device can be added for transferring the torque force of the wind turbine to the power generator.. When the wind turbine rotates with a higher speed, the coil induction unit of a larger area will cut the magnetic field so that the total magnet flux will change greatly so as to generate a great induction current. Since induction power generation is used, the power lose is very low. The power efficiency is far over any conventional wind power generation. If a magnetic floating wind turbine is used, the power efficiency can be further improved. The another type of power generator contains a coil induction unit having an induction end and a magnetic pole set which are installed on the power generating tower and the wind turbine device, respectively, when the wind turbine device rotates, the magnetic poles of the magnetic pole set approach to the induction end of the coil induction unit alternatively so that magnetic flux passing through the induction end changes alternatively so as to induce current.

In above two ways, the magnetic pole set and coil induction unit are installed by the following two ways:

1. One magnetic pole set is installed to the power generating tower and the coil induction unit is installed to the wind turbine device; and
2. The magnetic pole set is installed to the wind turbine and the coil induction unit is installed to the power generating tower.

Moreover, the power generator can be installed to the wind turbine device as the following positions: 1. the supporting device of the wind power reflector; 2. between two supporting beam of the wind power reflectors; 3. the shaft of the wind turbine ;and 4. the rotation bearing of the wind turbine.

The material of the power generating tower and the wind turbine can be selected from super high strength RPC ( reactive powder concrete) ; or super high strength RPCS (reactive powder complex steel) invented by the inventor of the present invention; or stainless steel, or alloy, or other high performance corrosion-proof material. The strengths of the RPC and RPCS are over 180 Mpa., which will not corrode and has a lifetime of over 100 years. The material will not crack, not drain water, has a preferred temperature tolerance. The performance thereof is like metal.

In the first preferred embodiment, there are two power generating towers, a first power generating tower and a second power generating tower. A net distance between the two power generating tower is not over twice of the diameter of each wind turbine. One power generating tower is fixed and the other has a movable base. A funnel shape air flow channel is formed between the two power generating towers so that the two power generating towers have a function of accumulating wind power as a virtual wind-collecting device. The wind wheel devices on the two power generating towers are arranged symmetrically at two sides of the two power generating towers; when the wind turbines are blown by airflow, the wind turbines rotate clockwise or counterclockwise with the direction of airflow so that the power generators generate current by magnetic induction. One of the power generating tower is moved, then the flow speed in the air flow path is controllable so as to control power generation. Moreover, a supporting device is installed between the two power generating towers for resisting the Magnus effect pressure from the power generating tower due to the fast gap airflow between the two power generating towers. A wind speed meter and wind pressure meter ca be installed for measuring related data to a control room.

In the second preferred embodiment of the present invention, a rotational supporting system with a tail is constructed. A wind turbine device, and two power generating towers are installed on the supporting system. A net distance between the two power generators is not over twice of the diameter of each wind turbine. A funnel shape air flow channel is formed between the two power generating towers so that the two power generating towers have a function of accumulating wind power as a virtual wind-collecting device. The wind wheel devices on the two power generating towers are arranged symmetrically at two sides of the two power generating towers; when the wind turbines are blown by airflow, the wind turbines rotate clockwise or counterclockwise with the direction of airflow so that the power generators generate current by magnetic induction. On the supporting system, two movable bases can be constructed and the two power generating towers are installed on the two bases, respectively. A supporting device is installed between the two towers so that the two towers may move with respect to one another. The length of the supporting device is changeable for adjusting the airflow speed between the towers. A wind speed meter and wind pressure meter can be installed on the supporting device. When wind is applied to the tail, the supporting system can be rotate so that the power generating tower or the wind-collecting device can be changed to have a preferred orientation for accumulating airflow.

The wind power generating method and device of the present invention can collect a large amount wind power. When wind speed is lower, the operation can be retained so as to improve the efficiency of wind power greatly. In the method and device of the present invention, when larger wind blows, the output power can be reverse proportionally to the three order of the wind speed. A great power can be generated. If the average wind speed in a certain area is 5 meters per second. When hurricane occurs, assume the speed is 50 meters per second, the power generated from the method and device of the present invention is 1000 times of normal time. If 50 % of the power is stored by high voltage electrolysis technology and fuel cell technology, it is equal to the 500 days of wind power generated in normal day. Thereby, the present invention can provide a larger amount of power so as to prevent environmental pollution. However efficiency of the present invention is over than other conventional methods.

To have a preferred wind power accumulating effect, the device of the present invention is preferred to be mounted on shore, meadow, etc. Moreover, flywheels, fuel batteries, or high voltage electrolysis system, larger heat storage or heat exchanger, or other power storage device can be used to store surplus power so as to increase the stability of output power.

The various aims and advantages of the present invention will be more readily understood from the following detailed description when read in conjunction with the appended drawing.

Fig. 1 is a schematic view about the first embodiment of the wind power generation of the present invention.

Fig. 1A is a plane schematic view of the first embodiment of the present invention.

Fig. 1B is a schematic view about the stream line of the first embodiment of the present invention.

Fig. 1C is a schematic view about the power generation adjustment by moving the power generating tower according to first embodiment.

Fig. 1D is a schematic view showing that the movement of power generating towers for avoiding overpower due to too large wind.

Fig. 1E is a schematic view about the adjustment of the wind power accumulating of the power generating tower when the wind direction is changed.

Fig. 2 is a schematic view about the second embodiment of the wind power accumulating power generating method of the present invention.

Fig. 2A is an assembled view of the second embodiment.

Fig. 2B is a schematic view about the adjustment of the wind power accumulating of the power generating tower when the wind direction is changed.

Fig. 3 is a schematic view of a third embodiment of the wind power accumulating power generating method of the present invention.

Fig. 3A is a schematic view about the adjustment of the wind power accumulating of the power generating tower when the wind direction is changed.

Fig. 3B is a schematic view about the adjustment of the wind power accumulating of the power generating tower when the wind direction is changed.

Fig. 3C is a schematic view about the wind power accumulating device which is used as a wind-proof mask of the power generating tower when huge wind blows.

Fig. 4 is an assembled view about the fourth embodiment of the wind power accumulating power generating method of the present invention.

Fig. 5 is an assembled view about four methods for controlling the speed of air flow at the wind outlet of the wind-collecting device.

Fig. 5A is a schematic view about the controlling the speed of air flow at the wind outlet of the wind-collecting device by changing the direction of the wind device.

Fig. 5B is a schematic view about the controlling the speed of air flow at the wind outlet of the wind-collecting device by changing the cross section area of the winding receiving opening of the wind device.

Fig. 5C is a schematic view about the controlling the speed of air flow at the wind outlet of the wind-collecting device by changing the cross section area of the winding receiving opening of the wind device.

Fig. 5D is a schematic view about the controlling the speed of air flow at the wind outlet of the wind-collecting device by changing geometric shape of the wind device.

Fig. 6 is a front view about the first of the wind power accumulating power generating method of the present invention.

Fig. 7 is a cross section view about the embodiment of the wind power accumulating power generating device of the present invention.

Fig. 7A is a cross section view about the wind power accumulating power generating device of the present invention.

Fig. 7B is a plane cross section view about the moveable base of the wind power accumulating power generating device of the present invention.

Fig. 8 is a schematic view about the embodiment of the wind turbine of the present invention.

Fig. 9 is a schematic view about the embodiment of the wind power reflectors and power generator of the present invention.

Fig. 9A is a cross section view about the embodiment of the wind power reflectors and power generator of the present invention.

Fig. 9B is a cross section view about the wind power reflectors of the present invention.

Fig. 9C is cross section view about the embodiment of the first annular beam, second annular beam, guide track, supporting wheel, brake, dust-proof device of the present invention.

Fig. 10 is a schematic view about the embodiment of the single tower wind power accumulating power generating device with tails and wind-collecting device of the present invention.

Fig. 11 is a schematic view about the embodiment of the double tower wind power accumulating power generating device with tails.

Fig. 11A is a plane schematic view about the embodiment of the double tower wind power accumulating power generating device with tails .

Fig. 11B is a schematic view about the embodiment of the double tower wind power accumulating power generating device with tails.

Fig. 12 is a schematic view about the embodiment of the double tower wind power accumulating power generating device with tails and flow guide device of the present invention.

Fig. 12A is a plane schematic view about the embodiment of the double tower wind power accumulating power generating device with tails of the present invention.

Fig. 12B is a schematic view about the embodiment of the double tower wind power accumulating power generating device with tails and flow guide device of the present invention.

Fig. 13 is a schematic view about the embodiment of the double tower wind power accumulating power generating device with tails and wind power accumulating device of the present invention.

Fig. 14 is a schematic view of the embodiment about another wind turbine device of the present invention.

Fig. 14A is a plane schematic view about the embodiment of another wind turbine device of the present invention.

Fig. 14B is a schematic view about the embodiment of another wind turbine device of the present invention.

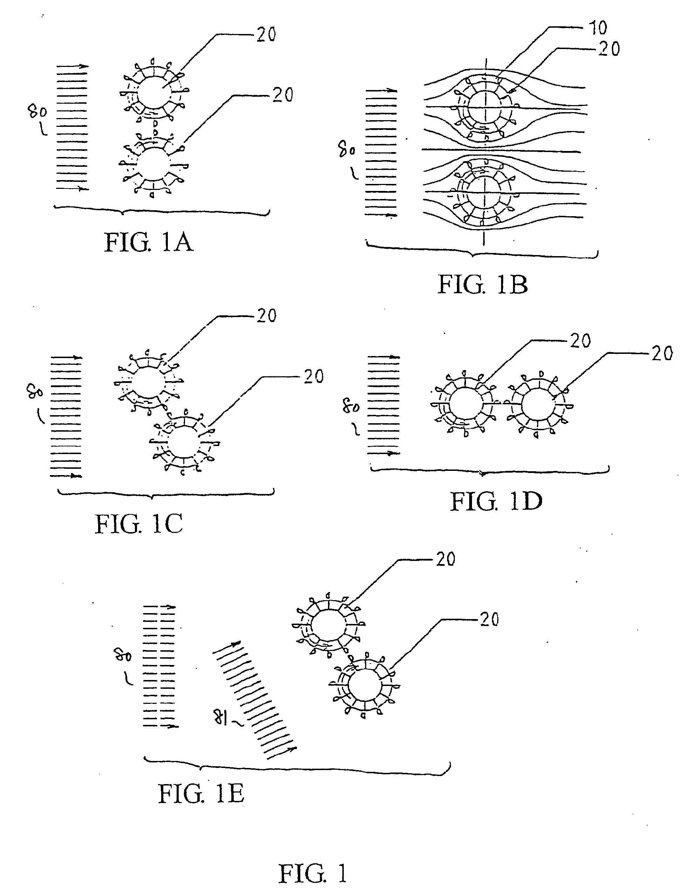

There are several ways to realize the present invention, which will be described here. As shown in Fig. 1, two towers are used. Two power generating towers 20 are installed. The wind turbines devices 50 on the two power generating towers 20 are arranged at the left and right sides. The two towers 20 are very near to one another so that the towers 20 have the function of accumulating wind power. The airflow flows the gaps between the two towers serve to push the wind turbine device 50.

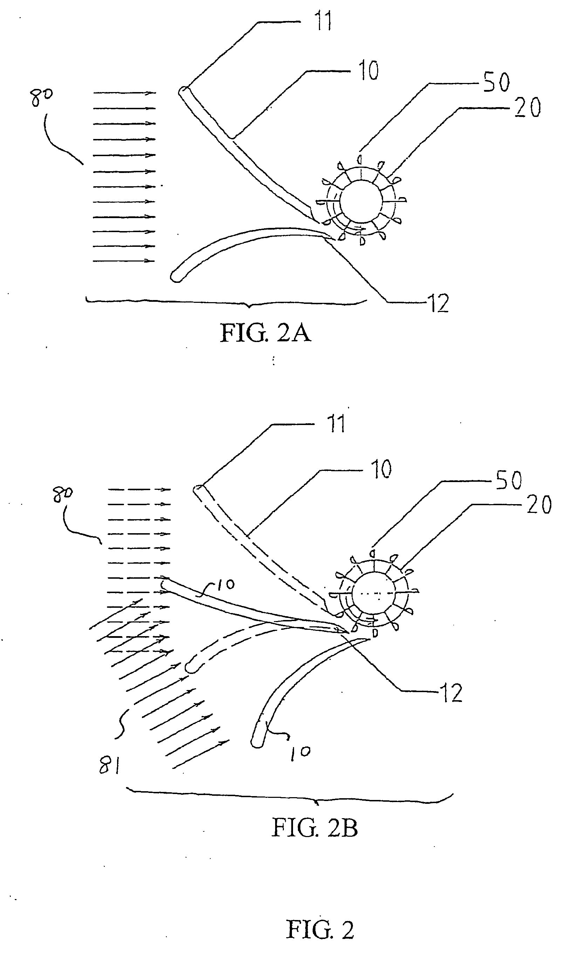

Referring to Fig. 2, the present invention can be realized by one wind-collecting device 10 and one power generating tower 20. A wind outlet of the wind-collecting device 10 is installed with a power generating tower 20. A plurality of wind turbine devices 50 is installed on the power generating tower 20. When the wind turbine devices 50 rotate, the power generating device 70 is induced to generate power.

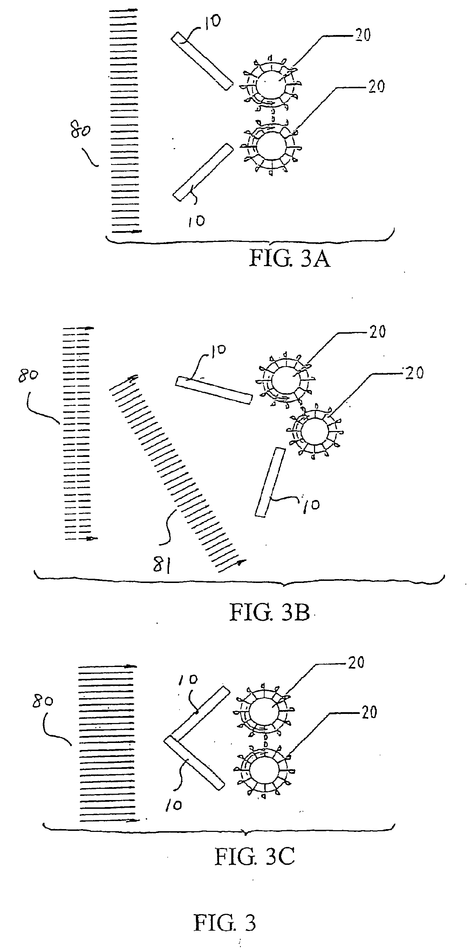

With reference to Fig. 3, one wind-collecting device 10 and two towers can realize the present invention. As the method shown in Fig. 1, a larger wind-collecting device 10 is installed at the wind blowing side of the two towers. The wind-collecting device 10 serves to increase the power generating effect. When hurricane blows, the wind-collecting devices 10 can be closed as a wind - preventing mask of the power generating towers.

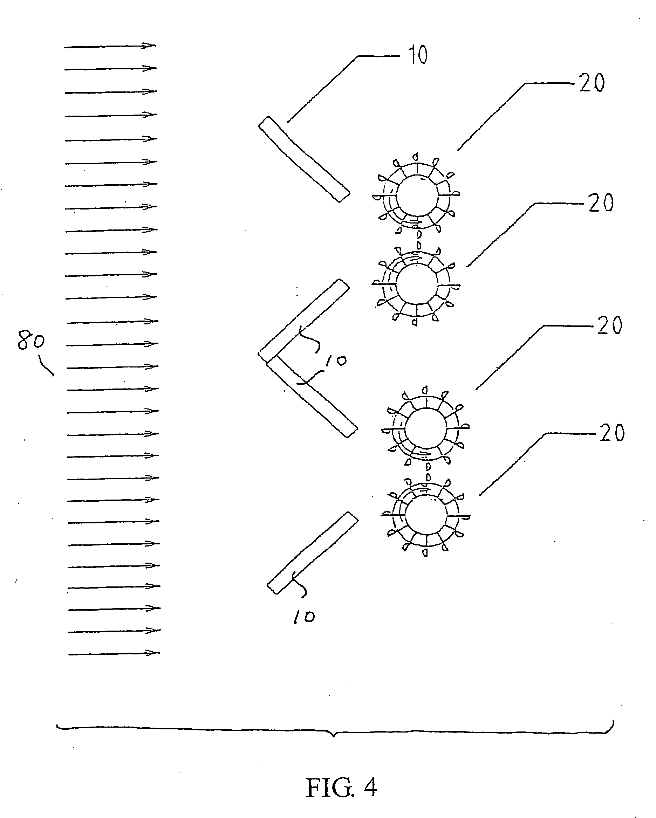

Referring to Fig. 4, in one area, above said three methods are realized by groups.

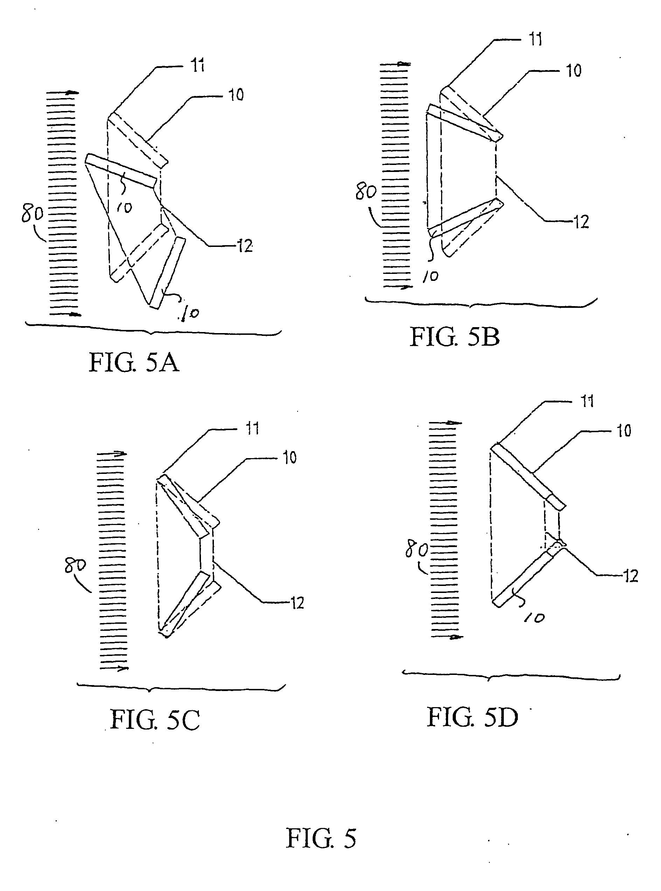

Referring to Fig. 5, four methods for controlling the wind outlets of the wind-collecting device 10, including, changing direction for accumulating wind power, change the cross section of the inlet 11, changing the cross section of the outlet 12 and changing the geometry shap of the wind-collecting device.

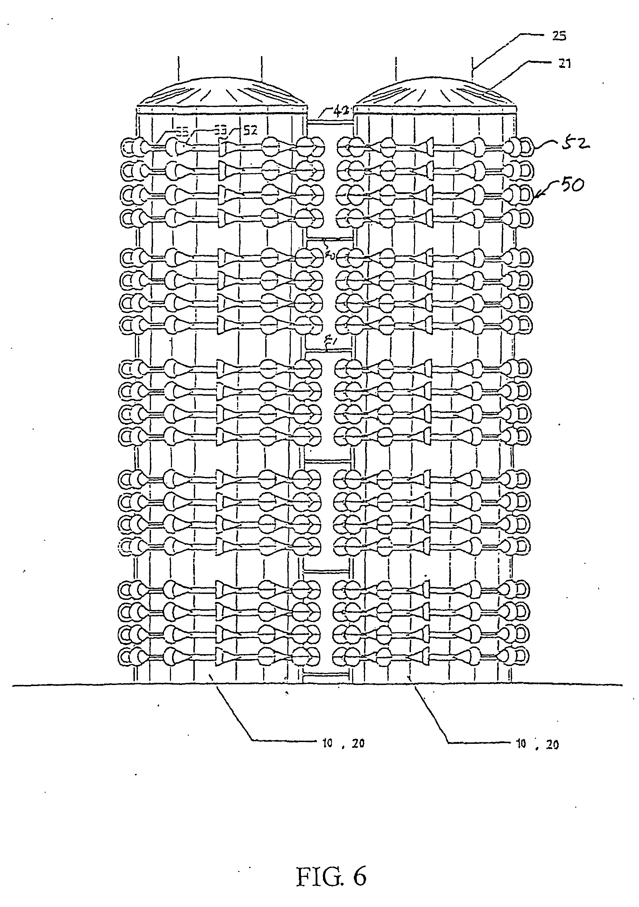

Referring to Fig. 6, a preferred embodiment of the present invention is illustrated, where two towers are installed. Each tower has the function of wind-collecting device 10.

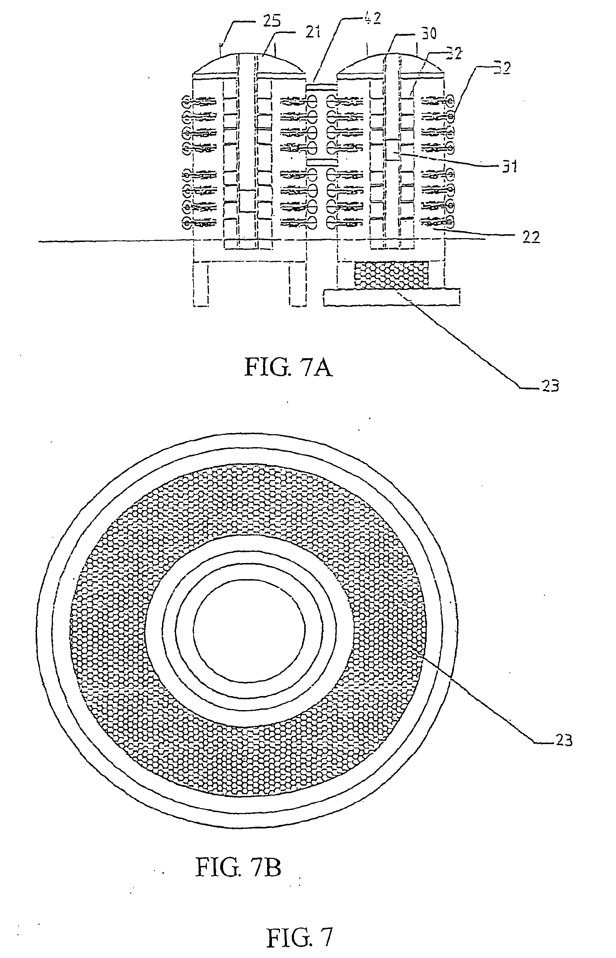

Referring to Fig. 7, a preferred embodiment of the present invention is illustrated, where two towers are installed. Each tower has the function of wind-collecting device 10.

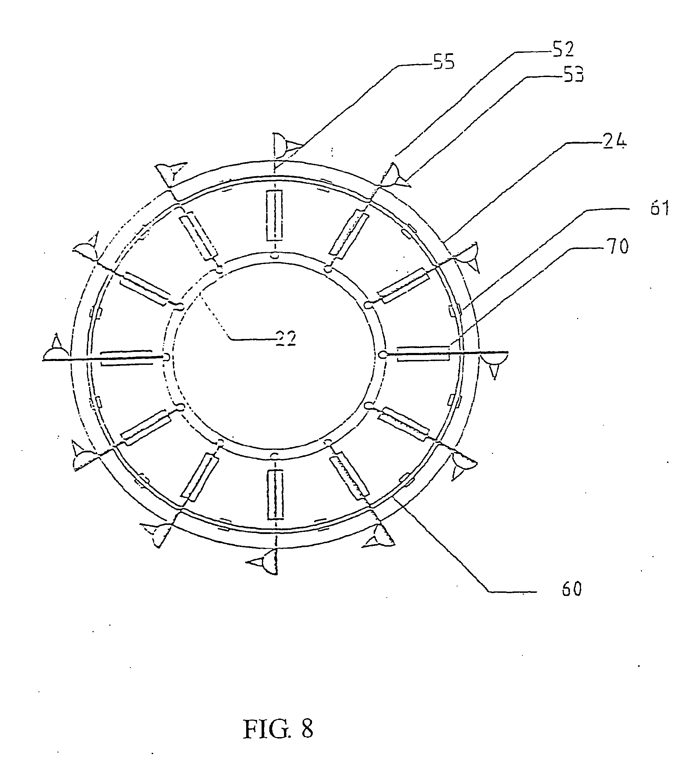

With reference to Fig. 8, the embodiment of the wind turbine device 50 of the present invention is illustrated.

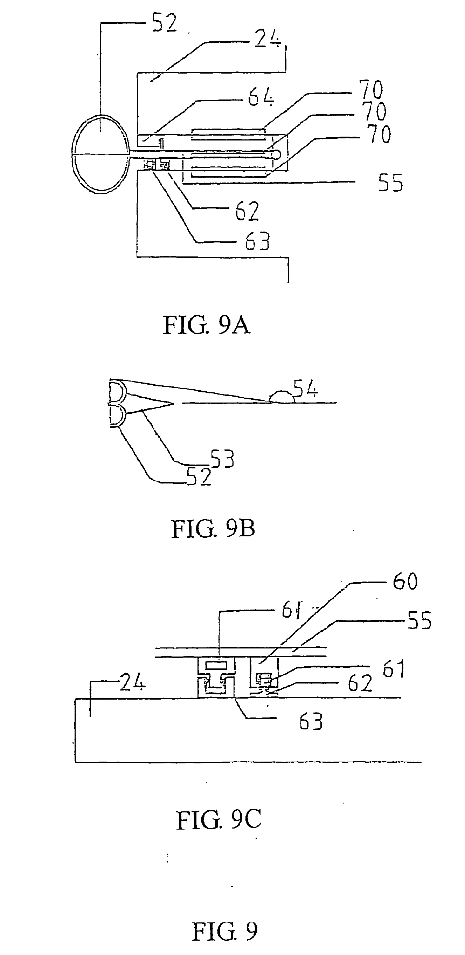

Referring to Fig. 9, the embodiments about the wind power reflectors 52 and power generating device 70 of the present invention is illustrated.

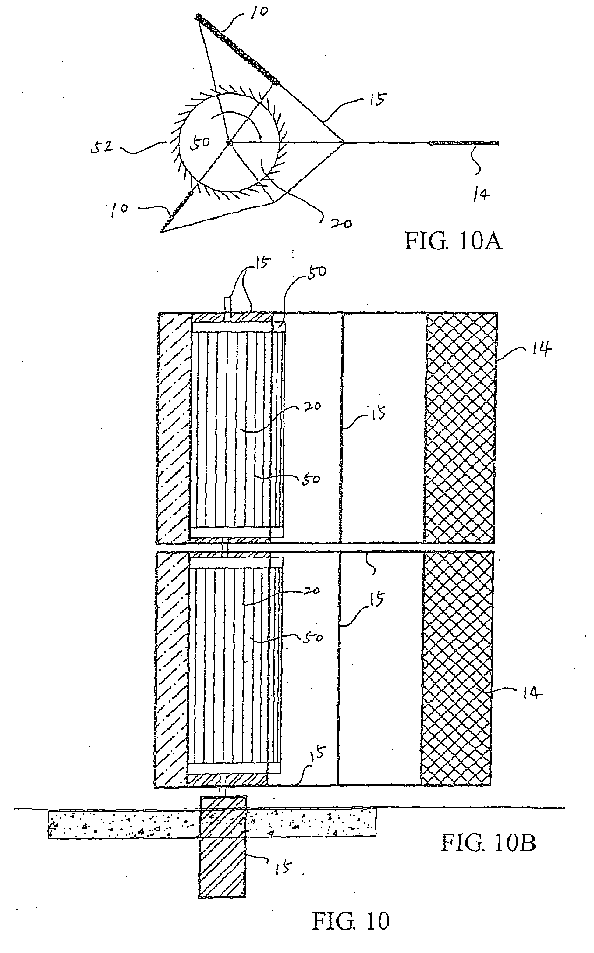

Referring to Fig. 10 shows the schematic view showing the embodiment of single tower about the tail device 14, flow guide device 13, and wind-collecting device 10 of the single tower wind power accumulating power generator of the present invention.

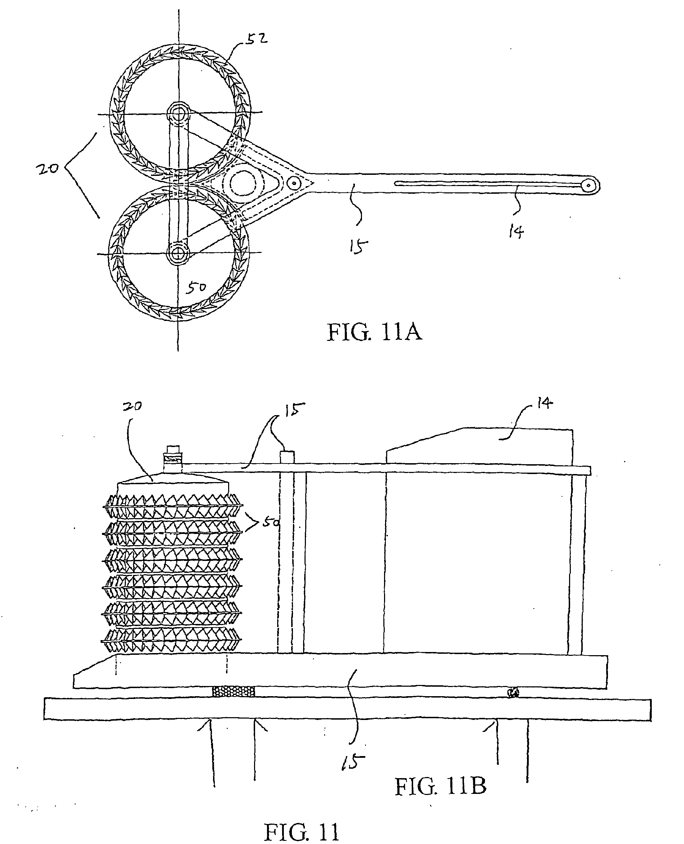

Fig. 11 is a schematic view showing the double tower wind power accumulating power generator with the tail device 14 of the present invention.

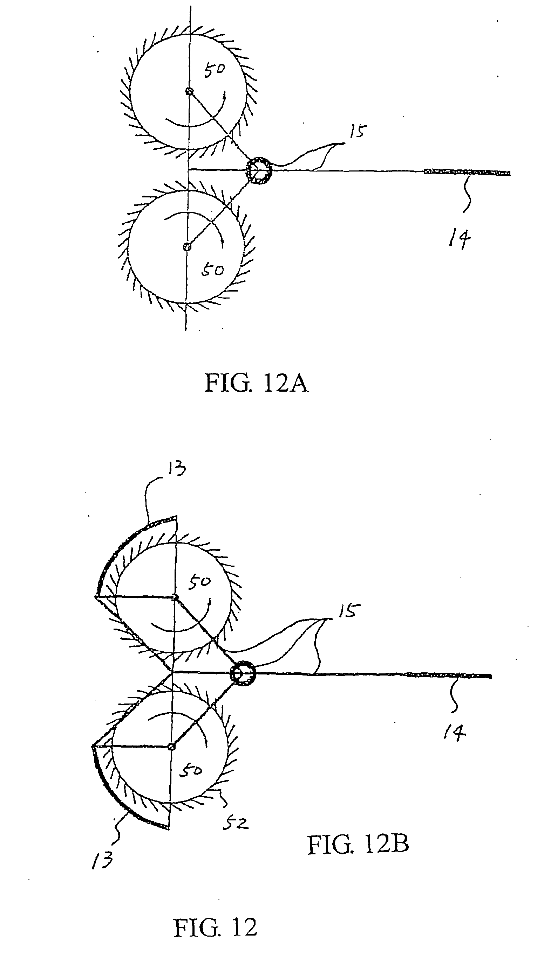

Fig. 12 is a schematic view showing the double tower wind power accumulating power generator with the tail device 14 and flow guide device 13 of the present invention.

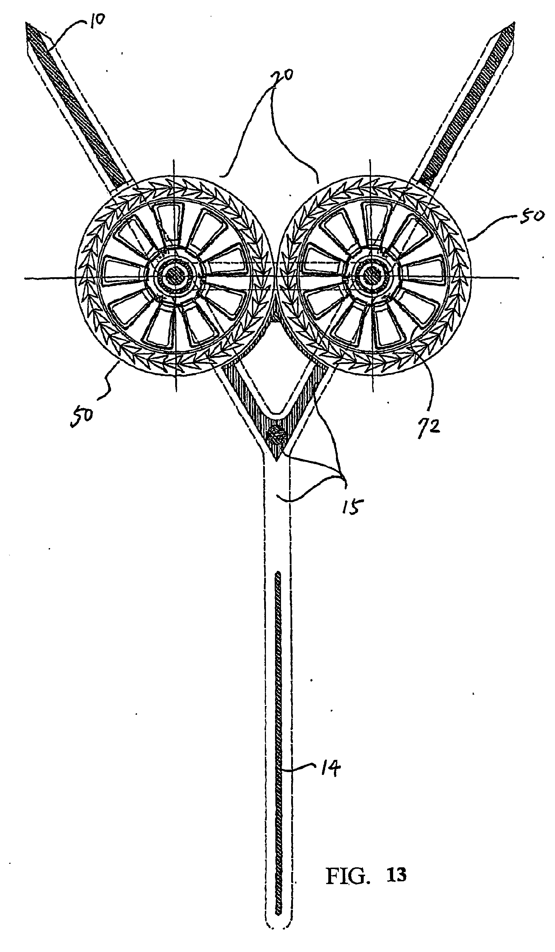

Fig. 13 is a schematic view showing the double tower wind power accumulating power generator with the tail device 14 and wind-collecting device 10 of the present invention.

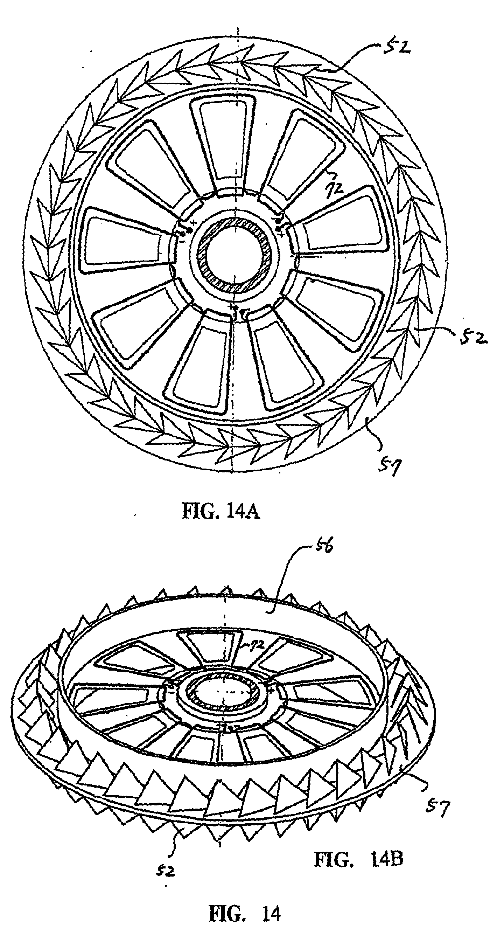

Fig. 14 is a schematic view about the wind turbine device 50 of the wind power accumulating power generator of the present invention. The tapered wind power reflectors 52 are arranged annularly around the supporting device 57 of the wind power reflector. The supporting device 57 has a vertical ring. A plurality of coil induction units is installed on the supporting device 57.

Referring to Fig. 1, the preferred embodiment of the present invention is illustrated. The components of the present invention are illustrated in Figs. 6 and 7. The present invention includes at least two power generating towers 20, a wind-collecting device 10, two tower devices 22, a supporter 42 installed between the two tower devices 22, and at least one wind turbine device 50 which is pivotally installed to the power generating towers 20. The wind power accumulating direction and the inlet cross section of the wind power accumulator 10 is adjustable.

The power generating tower 20 is a virtual wind-collecting device 10. The power generating tower 20 can be any rotational curved body, preferably, two cylindrical power generating tower with larger diameters wherein one of the power generating towers is fixed and the other is movable around the former one. The distance between the two towers is even several times of the diameter of towers. When horizontal airflow is cut by the two power generating towers 20. The air flows through the gap between the two towers 20. The wind speed increases rapidly so as to generate a larger wind power force to push the horizontal wind turbine device 50. Thereby, a great power is generated by a low lose power generating device 70. Due to boundary layer effect of the ground and the irregularly pulse of the natural airflow, the horizontal speed of the airflow changes with the elevation. To use the natural wind power, several tens or hundreds independent horizontal circular wind turbine devices 50 can be installed on the two towers.

One of the preferred embodiment of the present invention includes the follow features. A dome-like roof 21 is installed at a top of the tower 20 for shielding raining, or looking outwards or as a control room or a restaurant. A lighting arrester is installed on the roof. Stainless steel plates are adhered on the inner surface of the supporting portion 22 of the tower and are connected to ground for preventing leakage of electric power and thunderstroke. Each tower is installed with a elevator device 31 therein for transferring persons or aims. The size of the elevator device 31 is several meters. A tubular supporting structure is installed outside the elevator device 31. The tubular structure 22 has holes. Preferably, the supporting structure is made super high strength reactive powder concrete RPC. A transfer path 32 is formed between the elevator device 31 and the supporting device 22. At least one supporter device 42 is installed between the two towers for resisting the shift pressure from the towers due to Magnus effect and has the effect of retaining the distance connected the towers. A wind speed meter 40 and a wind pressure meter 41 are installed between the towers for measuring the airflow data of the gap between the towers. The supporter 42 between the towers is installed with telescopic device for adjusting the distance between the towers. One of the tower is fixed, and another tower may move along the tower by using a huge movable base 23. Large gears and oil pressure device drive the tower 20 so that the tower 20 is movable to adjust the direction of wind flow and the gap between the towers is changeable so as to control the power generation.

In preferred embodiment of the wind turbine devices 50 of the present invention, as shown in Figs. 6, 7, and 8, the wind turbine devices 50 are pivotally installed to the power generating tower 20. The wind power reflector 52 of each wind turbine device 50 protrudes from an outer surface of the power generating tower 20. The wind power reflectors 52 drive the wind turbine device 50 by wind force. The wind turbine device 50 is formed by a plurality of wind spoons 51 which are annularly arranged. Preferably, the wind turbine device 50 is made of titanium alloy, or stainless steel, or carbon fiber, or glass steel, or other high strength corrosion-preventing alloy. Each wind spoon 51 has a wind power reflector 52 and a supporting beam 55. Preferably, the wind power reflector 52 has a tail with a concave smooth hole therein so as to increase the stability. To have a maximum mechanic efficiency, when airflow impact the concave smooth hole at the tail end of the wind power reflector. The reflect angle 54 of the airflow is between 173 degrees to 176 degrees. A backside of the wind power wind power reflector 52 has a pin-like or round tapered wind-resisting device 53 for resisting the wind power. With respective the tail having concave smooth hole, the wind-resisting device 53 is the head portion of the wind power reflector 52. Preferably, the supporting beam 55 of the wind power reflector 52 is a long flat structure. One end of the supporting beam 55 is installed with the wind power reflector 52 and another end thereof is pivotally installed to a bearing at an outer edge of the tower shaft structure 22. A middle section of the supporting beam 55 is installed with an induction power generator device 70. Each wind power reflector supporting beam 55 may be installed with a first annular beam 60 for supporting and stabilizing the operation of the wind turbine device. Supporting wheels 61 are installed below the first annular beam 60. An annular track 62 is formed at a lower side of the supporting wheel 61. Besides, an outer side of the first annular beam 60 is installed with a second annular beam 65. A radius of the second annular beam 65 is larger than the first annular beam 60. A plurality of braking devices 63 can be installed on the second annular beam 65. Dust-proof devices 64 can be installed near the towers for preventing dust to be accumulating on the power generating device. An axis of the wind turbine device 50 is collinear to the axis of the towers 20.

Besides, to have a preferred efficiency, the diameter of the wind turbine device 50, D; the diameter, d, of the wind power reflector 52 along the diameter of the wind turbine device 50; and the speed ratio, Ns, have the following relation, D/ d =30- 90 / Ns, preferably, D /d = 54 / Ns. Preferably, the speed ratio Ns is between 2 to 3. The speed ratio Ns is the ratio of the speed of the airflow to the tangent direction along the outer edge of the wind turbine device 50. An air resistance coefficient of the head of the wind power reflector 52 is preferably smaller than the 0.4 time of the air resistance of the tail.

Besides, if some wind turbine devices 50 are necessary to be maintained, the braking devices 63 are actuated for stopping the operation of the wind turbine devices 50. Furthermore, as shown in Fig. 2, when strong wind occurs, the wind turbine devices 50 of one tower can be braked and are move to a side of another tower not blowing by wind so as to avoid the wind turbine devices 50 to operate too quickly so as to generate a too larger power to damage the power generating device. If the wind-collecting device 10 is installed, the wind-collecting device 10 can be closed to be formed as a wind mask for protecting the power generating tower 20 so as to prevent from overpower so to damage the whole power generator.

The power generator 70 of the present invention has a magnetic pole set 71 and a coil induction unit 72 which are installed to a supporting beam 55 and an annular plate 24 of a suspending arm of a supporter of the tower. When the wind turbine 50 rotates with a higher speed, the coil induction unit 72 of a larger flux cross section will cut the magnetic field so that the total magnet flux will change greatly to generate a great induction current.

In another preferred embodiment of the present invention, as shown in Fig. 13, at least, a tail device 14 and a supporting system 15 are built. Furthermore, a wind-collecting device 10 and two power generating towers 20 are structured on the supporting system 15. Two movable bases 23 are constructed on the supporting system 15. The two power generating towers 20 are installed on the two movable bases 23. The two power generating towers 20 are movable to one another. The net distance between the two power generating towers 20 are not over two times of the diameter of the wind turbine 50. Wind receiving faces of the two power generating towers 20 are installed with a funnel-like air flow channel so that wind can be collected by the power generating towers 20 as a virtual wind-collecting device 10. Two sides of the airflow channel are arranged with the wind turbine devices 50 which are arranged symmetrically at the left and right sides. When the wind turbine devices 50 are actuated, the wind turbines 50 rotate clockwise or counterclockwise. Then the power generator 70 is driven to generate electric flow. A supporter 42 can be installed between the two power generating towers 20 for resisting the tower pressure due to the Magnus effect. The length of the supporter 42 of the power generators is adjustable so as to adjust the airflow speed of the power generators 70. The supporter 42 is installed with wind speed meter and wind pressure meter. When wind blows upon the tail device 14, the supporting system 15 rotates so that the power generating towers 20 and the wind-collecting device 10 have a preferred ability to accumulating wind power.

In another preferred embodiment about the wind turbines of the present invention, referring to Fig. 14, the wind turbine 50 is formed by a plurality of tapered wind power reflectors 52 which are arranged on a supporting device 57. The wind power reflectors 52 are symmetrically arranged on the supporting device 57 at the upper and lower sides. An inner side of the wind power reflector 52 has a vertical ring 56. An outer side of the vertical ring 56 is installed with the wind power reflector 52. The magnetic pole sets or coil induction unit 72 is installed on the power generator 70. In the drawing, it is illustrated that in the power generator 70, the coil induction unit 72 is installed on the supporting device 57.

In the preferred embodiment of the present invention about two power generating towers being used. When no wind-collecting device 10 is installed, the theoretic power generation is calculated as the following based on the fluid dynamics, wherein the generator has a distance of 1 meter from the ground. The power of the wind wheel is:

$$(Fu)_h = \rho \ QUV_r(1 - COS \ \theta )$$

$$= \rho \ A\zeta\eta\phi d(1 - \phi)(1 - COS \ \theta)(1 + D/d)^3 \times (V_{10})^3 \times (h/10)^{3\alpha}$$

Total power output of the two power generators are:

$$W = 2 \times \Sigma_H (Fu)_h$$

where
$\Sigma_H$ = Sum of the value along the height of the towers.
D = Diameter of the power generating tower.
d = Net distance of the gap between the power generators.
$\rho$ = Density of air.
Q = Air flow applied to the wind power reflector.
$\theta$ = Wind reflect angle of the wind power reflector which fixed on a wind turbine device.
A = Airflow receiving cross section of the wind-collecting device.
$\zeta$ = Mechanical efficiency of the wind turbine.
$\eta$ = Ratio of the airflow receiving cross section of the wind power reflector device to the gap cross section between the power generators.
$\phi$ = Ratio of the tangent speed of the wind turbine to the wind speed of the gap, which is the inverse of the ratio $N_S$.

h = Height from the ground.

$\alpha$ = roughness coefficient of the ground.

$V_{10}$ = Horizontal wind speed, at 10 meter height from the ground.

$V_h$ = Horizontal wind speed with a height of h meter from the ground = $V_{10}(h/10)^{\alpha}$

$V_s$ = Wind speed of the gap between the two power generating towers = $V_h(1 + D/d)$

U = Rotation speed of the wind turbine = $\phi\, V_s = \phi\, V_h \times (1 + D/d)$

$V_r$ = Relative speed = $V_s - U = (1 - \phi)V_s = (1 - \phi)V_h(1 + D/d)$

Q = Air flow applied to the wind power reflector= $V_s A\, \eta$

Thereby, it is known that other than positively proportional to the three orders of the wind speed, diameter of the power generating tower; net distance d of the gap between the power generating towers. Enlarging the ratio of the D / d, the power generating towers serves to accumulate wind power to increase the output power.

In the engineering application of the principle of moving vane to impulse turbine wheel, a series of vanes is mounted on the periphery of a rotating wheel. The vanes are usually so spaced that the entire discharge $Q_j$ of the jet is deflected by the vanes. Therefore, the total power output of a frictionless impulse turbine is

$$( Fu)_h = \rho\, Q_j\, (V_s - U)(1 - COS\, \theta)U$$

Furthermore, the wind-collecting device has an inlet. The width of the inlet is equal to 2(d+D). Namely, the wind-collecting device accumulates the airflow from the wind receiving faces of the power generating towers so as to increase power generation. When the airflow reflect angle of the wind power reflector is near 180 degrees, the output power will enlarge. The larger the wind resistance of the wind power reflectors, the worse the mechanic efficiency $\zeta$ of the wind turbine. Therefore, lower air resistance wind power reflectors are used in the present invention. This is beneficial to increase the output power. The ratio of the tangent speed of the wind power reflector to the wind speed of the gap between the power generator $\phi$ is equal to the inverse of the $N_S$. Preferably, $N_S$ is between 2-3. When $N_S$ is equal to 2, $\phi(1 - \phi)$ has a maximum. When $N_S$ is near 2, output electric power becomes larger. The ratio of the wind receiving area of the wind power reflector to the area of the gap $\eta$ is near 1, and thus a larger output power generates.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

**Claims**

1. A wind power accumulating power generating method used in a power generating system including at least one power generating tower (20); at least one wind turbine device (50) being located on the at least one power generating tower (20); a wind-collecting device (10) and a power generator (70); comprising the steps of:

   annularly arranging each of the at least one wind turbine device (50) around the at least one power generating tower (20); the axis of the wind turbine device (50) which perpendicularly to the ground being collinearly to the power generating tower (20); and
   guiding and accumulating wind power by wind-collecting device (10) or the power generating tower (20) for enhancing torques applied to the wind turbine device (50) and speed of airflow so that the wind turbine device (50) installed on the power generating tower (20) to rotate rapidly; and thus driving the power generator (70) to generate electric power.

2. The wind power accumulating power generating method according to claim 1, wherein a supporting system (15) is used to support at least one of the wind-collecting device (10) and the at least one power generating tower (20); the supporting system (15) has a tail device (14); wind power applied to the tail device (14) rotates the supporting system (15) so that the wind-collecting device (10) or the power generating tower (20) has a preferred location for accumulating wind power.

3. The wind power accumulating power generating method according to claim 1, wherein there are two power generating towers (20), a first power generating tower and a second power generating tower; each power generating tower (20) has a wind turbine device (50) and a power generator (70); the wind turbine device (50) is pivotally installed to a respective power generating tower (20); the power generator (70) is installed to the respective wind turbine device (50) and the power generating tower (20); when the wind turbine device (50) rotate, induction current is induced; a net distance between the two power generators (70) is not over twice of the diameter of each wind turbine; a funnel shape air flow channel is formed between the two power generating towers (20) so that the two power generating towers (20) have a function of accumulating wind power as a virtual wind-collecting device (10); the wind turbine devices (50) on the two power generating towers (20) are arranged symmetrically at two sides of the two power generating towers (20); when the windturbines are blown by airflow, the wind turbines rotate clockwise or counterclockwise with the direction of airflow so that the power generators (70) generate current by magnetic induction.

4. The wind power accumulating power generating method according to claim 3, wherein the first power generating tower (20) is fixed motionlessly and the second power generating tower (20) has a movable base (23) for changing the speed of airflow between the two power generating towers (20) and control the power generation of the power generator (70) by the wind power.

5. The wind power accumulating power generating method according to claim 2, wherein there are two power generating towers (20), a first power generating tower and a second power generating tower; each power generating tower (20) has a wind turbine device (50) and a power generator (70); the wind turbine device (50) is pivotally installed to a respective power generating tower (20); the power generator (70) is installed to the respective wind turbine device (50) and the power generating tower (20); when the wind turbine device (50) rotate, induction current is induced; a net distance between the two power generators (70) is not over twice of the diameter of each wind turbine; a funnel shape air flow channel is formed between the two power generating towers (20) so that the two power generating towers (20) have a function of accumulating wind power as a virtual wind-collecting device (10); the wind turbine devices (50) on the two power generating towers (20) are arranged symmetrically at two sides of the two power generating towers (20); when the wind turbines are blown by airflow, the wind turbines rotate clockwise or counterclockwise with the direction of airflow so that the power generators (70) generate current by magnetic induction.

6. The wind power accumulating power generating method according to claim 5, wherein the first power generating tower (20) is fixed motionlessly and the second power generating tower (20) has a movable base (23) for changing the speed of airflow between the two power generating towers (20) and control the power generation of the power generator (70) by the wind power.

7. The wind power accumulating power generating method according to claim 1, wherein a airflow inlet (11) cross section of the wind-collecting device (10) is larger than a airflow outlet (12) of the wind-collecting device (10); the wind turbine device (50) is pivotally installed on the power generating tower (20); the power generator (70) is installed on the wind turbine device (50) and power generating tower (20) respectively; when the wind turbines rotate, current will be induced; the power generating tower (20) is installed at a wind outlet (12) of the wind-collecting device (10); the wind turbine devices (50) are driven by wind from a wind outlet (12) of the wind-collecting device (10).

8. The wind power accumulating power generating method according to claim 2, wherein a airflow inlet (11) cross section of the wind-collecting device (10) is larger than a airflow outlet (12) cross section of the wind wind-collecting device (10); the wind turbine device (50) is pivotally installed on the power generating tower (20); the power generator (70) is installed on the wind turbine device (50) and power generating tower (20) respectively; when the wind turbines rotate, current will be induced; the power generating tower (20) is installed at a outlet (12) of the wind-collecting device (10); the wind turbines are driven by wind from a wind outlet (12) of the wind-collecting device (10).

9. The wind power accumulating power generating method according to claim 3, wherein a airflow inlet (11) cross section of the wind-collecting device (10) is larger than a airflow outlet (12) cross section of the wind wind-collecting device (10) for accumulating wind power; the wind-collecting device (10) is installed in front of the wind blowing side of the two power generating towers (20) so that the wind outlet (12) of the wind-collecting device (10) is near the wind inlet (11) of the funnel shape airflow channel for increasing the ability of accumulating wind power.

10. The wind power accumulating power generating method according to claim 4, wherein a airflow inlet (11) cross section of the wind-collecting device (10) is larger than a airflow outlet (12) cross section of the wind wind-collecting device (10) for accumulating wind power; the wind-collecting device (10) is installed in front of the wind blowing side of the two power generating towers (20) so that the wind outlet (12) of the wind-collecting device (10) is near the wind inlet (11) of the funnel shape airflow channel for increasing the ability of accumulating wind power.

11. The wind power accumulating power generating method according to claim 5, wherein a airflow inlet (11) cross section of the wind-collecting device (10) is larger than a airflow outlet (12) cross section of the wind wind-collecting device (10) for accumulating wind power; the wind-collecting device (10) is installed in front of the wind blowing side of the two power generating towers (20) so that the wind outlet (12) of the wind-collecting device (10) is near the wind inlet (11) of the funnel shape airflow channel for increasing the ability of accumulating wind power.

12. The wind power accumulating power generating method according to claim 6, wherein an airflow inlet (11) cross section of the wind-collecting device (10) is larger than a airflow outlet (12) cross section of the wind wind-collecting device (10) for accumulating wind power; the wind-collecting device (10) is installed in front of the wind blowing side of the two power generating towers (20) so that the wind outlet (12) of the wind-collecting device (10) is near the wind inlet (11) of the funnel shape airflow channel for increasing the ability of accumulating wind power.

13. The wind power accumulating power generating method according to any of claims 7, 8, 9, 10, 11, or 12, wherein the speed of airflow at a wind outlet (12) of the wind-collecting device (10) is controllable for controlling the power output of the wind power generator (70).

14. The wind power accumulating power generating method according to claim 2, further comprising a flow guide device (13) for guiding airflow and shielding airflow of the wind turbine device (50) for reducing air resistances of areas resisting the rotation of the wind turbine device (50) when the wind turbine device (50) rotates.

15. The wind power accumulating power generating method according to claim 3, further comprising a flow guide device (13) for guiding airflow and shielding airflow of the wind turbine device (50) for reducing air resistances of areas resisting the rotation of the wind turbine device (50) when the wind turbine device (50) rotates.

16. The wind power accumulating power generating method according to claim 4, further comprising a flow guide device (13) for guiding airflow and shielding airflow of the wind turbine device (50) for reducing air resistances of areas resisting the rotation of the wind turbine device (50) when the wind turbine device (50) rotates.

17. The wind power accumulating power generating method according to claim 5, further comprising a flow guide device (13) for guiding airflow and shielding airflow of the wind turbine device (50) for reducing air resistances of areas resisting the rotation of the wind turbine device (50) when the wind turbine device (50) rotates.

18. The wind power accumulating power generating method according to claim 6, further comprising a flow guide device (13) for guiding airflow and shielding airflow of the wind turbine device (50) for reducing air resistances of areas resisting the rotation of the wind turbine device (50) when the wind turbine device (50) rotates.

19. The wind power accumulating power generating method according to any of claims 2-12, or 14-18, wherein there is at least two groups; each group contains at least one power generator (70); wind turbine device (50) and wind-collecting device (10); different groups contain same configuration or different configurations.

20. The wind power accumulating power generating method according to claim 13, wherein the direction for accumulating wind power by the wind-collecting device (10) is changed for controlling the speed of airflow at wind outlet (12) of the wind-collecting device (10) so as to control the power generation of the power generator (70).

21. The wind power accumulating power generating method according to claim 13, wherein an airflow inlet (11) cross section of the wind-collecting device (10) is changed for controlling the speed of airflow at wind outlet (12) of the wind-collecting device (10) so as to control the power generation of the power generator (70).

22. The wind power accumulating power generating method according to claim 13, wherein a shape of the wind-collecting device (10) is changed for controlling the speed of airflow at wind outlet (12) of the wind-collecting device (10) so as to control the power generation of the power generator (70).

23. The wind power accumulating power generating method according to any of claims 1-3, 5, 7, or 8, wherein the power generator (70) contains a coil induction unit and a magnetic pole set which are installed on the power generating tower (20) and the wind turbine device (50), respectively, when the wind turbine device (50) rotates, the wind turbine device (50) moves relative to the power generating tower (20) so that the coil induction unit cuts through the magnetic field so that magnetic flux of the loop induction unit changes to induce current.

24. The wind power accumulating power generating method according to any of claims 1-3, 5, 7, or 8, wherein the power generator (70) contains a coil induction unit having a magnetic conduct core with an induction end and a magnetic pole set which are installed on the power generating tower (20) and the wind turbine device (50), respectively, when the wind turbine device (50) rotates, the magnetic poles of the magnetic pole set approach to the induction end of the coil induction unit alternatively so that magnetic flux passing through the magnetic conduct core of a coil induction unit changes alternatively so as to induce current.

25. The wind power accumulating power generating method according to any of claims 7-12, wherein airflow at the wind outlet (12) of the wind-collecting device (10) flows along a tangent direction of the wind turbine device (50) to blow to the wind turbine device (50) so that the wind turbine device (50) rotates.

26. The wind power accumulating power generating method according to any of claims 7-12, wherein at least one cross section of the wind outlet (12) of the wind-collecting device (10) is formed as a trumpet reduced airflow channel.

27. The wind power accumulating power generating method according to any of claims 3 or 4, wherein airflow at the wind outlet (12) of the wind-collecting device (10) flows along a tangent direction of the wind turbine device (50) to blow to the wind turbine device (50) so that the wind turbine device (50) rotates.

28. The wind power accumulating power generating method according to any of claims 3 or 5, wherein at least one cross section of the funnel shape airflow channel is formed as a trumpet reduced airflow channel.

29. The wind power accumulating power generating method according to any of claims 3 or 5,wherein the supporting device (57) between two power generating towers (20) serves for adjusting a distance of the two power generating towers (20).

30. A wind turbine device used in a wind power accumulating power generating device (70) comprising at least one wind turbine; at least one annular beam for fixing and supporting the wind turbine device (50); a plurality of supporting wheels below the first annular beam; and at least one annular track for supporting the first annular beam; wherein each wind turbine having a plurality of spoon-like devices which are annually arranged with a radiate configuration on a power generating tower (20); each spoon has a supporting rod; a free end of each spoon has a wind power reflector (52) and another end of the spoon is pivotally installed to the power generating tower (20).

31. The wind turbine device according to claim 30, further comprising at least one second annular beam for fixing and supporting the wind turbine device (50); and brake devices are installed below the second annular beam.

32. The wind turbine device according to claim 30, further comprising a dust-proof device fixed to an outer ring of the wind turbine device (50).

33. The wind turbine device according to claim 30, wherein a diameter of the wind turbine device (50) is D, a size of the wind reflector device of wind turbine in the radius direction is d, a speed ratio of the wind turbine is Ns, then $D/d=(30{\sim}90) / Ns$, Ns is between 2-6, Ns is a ratio of the wind speed to the tangent speed of the wind turbine.

34. The wind turbine device according to claim 30, wherein each wind reflector has two cups; an airflow jet reflect angle to the input airflow is between 120 degrees to 180 degrees; and a back side of the wind power reflector (52) has a needle or a taper tip.

35. The wind turbine device according to claim 27, wherein the wind power reflector (52) has a shape selected from one of a bullet type with a tail end which has a semispherical concave hole, a concave plate, a curved vane, a concave semi-cone shape, a concave pyramid-shape shell, a concave cone-shape shell, a dome-shape shell, a semi-cylindrical shape, a curved shell shape, a angle-shape plate, and a spiral-shape; a concave surface of the wind power reflector (52) faces the airflow; and a back side of the wind power reflector (52) has a needle or a taper tip.

36. A power generating tower used in a wind power accumulating power generating device (70) comprising at least one wind turbine device (50); at least one tower (20) structure of the power generating tower (20) and at least one power generator (70); the wind turbine device (50) has a plurality of wind power reflectors (52) which are sequentially and longitudinally arranged on the tower structure; each wind turbine device (50) is horizontally arranged along the tower structure; each wind turbine rotates independently; each power generator (70) includes a magnetic pole set and a coil induction unit; when the wind turbine rotates, the coil induction unit is induced by the magnetic pole set so as to induce current.

37. The power generating tower according to claim 36, wherein a bottom of the tower body is a surface of revolution having a shape selected from one of a cylindrical shape, a revolution parabolic shape; and a revolution hyperbolic shape.

38. The power generating tower according to claim 36, further comprising at least one arch roof with a lighting arrester.

39. The power generator (70) according to claim 36, further comprising a elevator inside the tower structure.

40. The power generating tower according to claim 36, further comprising a supporting system (15) having a tail wing for change positions for supporting and installing the tower structure.

41. The power generating tower according to claim 36, further comprising at least one wind-collecting device (10); the power generating tower (20) is installed at a wind outlet (12) of the wind-collecting device (10); airflow at a wind outlet (12) is applied to the wind power reflectors (52) of the wind turbine device (50) along a tangent direction of the wind turbine device (50) so as to drive the wind turbines to rotate rapidly so that the power generator (70) generates induced current.

42. The power generating tower according to claim 41, wherein the wind-collecting device (10) has a movable base (23) for adjusting a direction of accumulating wind power.

43. The power generating tower according to claim 42, further comprising at least one control system for controlling the movable base (23) and adjusting wind-collecting direction.

44. The power generating tower according to claim 41, further comprising at least one control system for performing one of adjusting a cross section of a wind inlet (11) of the wind-collecting device (10); adjusting a cross section of a wind outlet (12) and changing shape of the wind-collecting device (10).

45. The power generating tower claimed in claim 36, further comprising at least one flow guide device (13) for guiding airflow and cover part of airflow blowing to the wind turbine device (50) so as to reduce the air resistance which reduce the rotation speed of the wind turbine device (50).

46. The power generating tower according to any of claims 36 or 40, wherein there are two tower structures; a net distance between the two tower structures is not over two times of a diameter of the tower structures; a funnel shape air flow channel is formed between the two power generating towers (20) so that the two power generating towers (20) have a function of accumulating wind power as a virtual wind-collecting device (10).

47. The power generating tower according to claim 46, further comprising at least one supporting device (57) between the two tower structure for resisting the Magnus pressure force of the tower structures due to the high speed airflow between the two tower structures.

48. The power generating tower according to any of claims 47, wherein the length of the supporting device (57) is adjustable for change the distance between the two power generating towers (20).

49. The power generating tower according to any of claims 47 or 48, further comprising a movable base (23) for bearing one of the two power generating towers (20) so as to change the distance and direction of the two power generating towers (20).

50. The power generating tower according to any of claims 36 or 41, wherein having two power generating towers (20) and a net distance between the two power generating towers (20) is not over two times of diameter of a power generating tower (20); a funnel shape air flow channel is formed between the two power generating towers (20) so that the two power generating towers (20) have a function of accumulating wind power as a virtual wind-collecting device (10).

51. The power generating tower according to claim 40, wherein the tail is one of a vertical plate, a wing shape or a sail shape.

52. The power generating tower according to claim 51, further comprising a horizontal stable wing attached to the tail.

53. The power generating tower according to any of claims 36 or 40, wherein the wind turbine has a cylinder shape and an outer edge of the wind turbine has wind power reflectors (52); when wind applied to the wind power reflectors (52), the wind turbine will be forced to rotate; and the power generator (70) induces current.

54. The power generating tower according to any of claims 36 or 40, wherein the wind turbine device (50) includes at least one wind turbine, each wind turbine has a plurality of spoon which are annually arranged with a radiate configuration on a power generating tower (20); each spoon has a supporting beam; a free end of each spoon has a wind power reflector (52); at least one annular beam for fixing the spoons and supporting the wind turbine device (50); a plurality of supporting wheels are installed below the first annular beam; and at least one annular track for supporting the first annular beam.

55. The power generating tower according to any of claims 36 or 40, further comprising a transfer device for transferring torque force for rotating the wind turbine device (50) to the power generator (70).

56. The power generating tower according to any of claims 36 or 40, wherein the magnetic pole set and the coil induction unit are installed to the tower body and wind turbine device (50), respectively.

57. The power generating tower according to claim 53, wherein the wind power reflector (52) has a shape selected from one of a bullet type with a tail end which has a semispherical concave hole, a concave plate, a curved vane, a concave semi-cone shape, a concave pyramid-shape shell, a concave cone-shape shell, a dome-shape shell, a semi-cylindrical shape, a curved shell shape, a angle-shape plate, and a spiral-shape.

58. The power generating tower according to claim 54, wherein the wind power reflector (52) has a shape selected from one of a bullet type with a tail end which has a semispherical concave hole, a concave plate, a curved vane, a concave semi-cone shape, a concave pyramid-shape shell, a concave cone-shape shell, a dome-shape shell, a semi-cylindrical shape, a curved shell shape, a angle-shape plate, and a spiral-shape.

59. The power generating tower according to any of claims 57 or 58, wherein wind power reflector (52) has a head and a tail; the head is smooth and faces to the tangent direction along the rotation surface of the wind turbine device (50).

60. The power generating tower according to any of claims 57 or 58, wherein the head of the wind power reflector (52) has an air resistance coefficient smaller than the 0.4 times of the air resistance coefficient of the tail of the wind power reflector (52) when the tail is applied by airflow jet.

61. The power generating tower according to claim 60, wherein a tail of the wind power reflector (52) has a smooth concave hole or concave groove.

62. The power generating tower according to claim 53, wherein the supporting device (57) of the wind power reflector (52) has a shape selected from one of a wheel shape, disk shape, or cylindrical shape.

63. The power generating tower according to any of claims 36 or 40, wherein the tower structure is a hollow tubular supporting axis and an interior thereof is passed by electric wires.

64. The power generating tower according to any of claims 36 or 40, further comprising a brake device for stop the wind turbine device (50).

FIG. 1A

FIG. 1B

FIG. 1C

FIG. 1D

FIG. 1E

FIG. 1

FIG. 2A

FIG. 2B

FIG. 2

FIG. 3A

FIG. 3B

FIG. 3C

FIG. 3

FIG. 4

FIG. 5A

FIG. 5B

FIG. 5C

FIG. 5D

FIG. 5

FIG. 6

FIG. 7A

FIG. 7B

FIG. 7

FIG. 8

FIG. 9A

FIG. 9B

FIG. 9C

FIG. 9

FIG. 10A

FIG. 10B

FIG. 10

FIG. 11A

FIG. 11B

FIG. 11

FIG. 12A

FIG. 12B

FIG. 12

FIG. 13

FIG. 14A

FIG. 14B

FIG. 14

<table>
<tr><td colspan="2" align="center"><strong>INTERNATIONAL SEARCH REPORT</strong></td><td>International application No.<br><br>PCT/CN02/00251</td></tr>
</table>

**A. CLASSIFICATION OF SUBJECT MATTER**

IPC<sup>7</sup> F03D3/04

According to International Patent Classification (IPC) or to both national classification and IPC

**B. FIELDS SEARCHED**

Minimum documentation searched (classification system followed by classification symbols)

F03D3/00, F03D3/02, F03D/04

Documentation searched other than minimum documentation to the extent that such documents are included in the fields searched

Electronic data base consulted during the international search (name of data base and, where practicable, search terms used)

EPOQUE II(WPI, EPODOC, PAJ); CNPAT: wind, tower, guiding, collecting, generator etc.

**C. DOCUMENTS CONSIDERED TO BE RELEVANT**

| Category* | Citation of document, with indication, where appropriate, of the relevant passages | Relevant to claim No. |
|---|---|---|
| A | US5463257A(Ton A. Yea)  31 Oct.1995(31,10,1995)<br><br>See the whole document | 1-64 |
| A | US4421452A （Raoul Rougemont etal） 20 Dec.1983(20,12,1983)<br><br>See the whole document | 1-64 |
| A | US4365929A （Philip Retz） 28 Dec.1982(28,12,1982)<br><br>See the whole document | 1-64 |
| A | JP8232831A （TSUTSUMI M） 10 Sept.1996(10,09,1996)<br><br>See the whole document | 1-64 |

☐ Further documents are listed in the continuation of Box C. ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 5.July 2002 （05.07.02） | 18 JUL 2002 |

| Name and mailing address of the ISA/CN | Authorized officer |
|---|---|
| 6 Xitucheng Rd., Jimen Bridge, Haidian District, 100088 Beijing, China | YANG Kefei |
| Facsimile No. 86-10-62019451 | Telephone No. 86-10-62093726 |

Form PCT/ISA/210 (second sheet) (July 1998)

**INTERNATIONAL SEARCH REPORT**
Information on patent family member

International application No.
PCT/CN02/00251

| Patent document cited in search report | Publication date | Patent family member(s) | Publication date |
|---|---|---|---|
| US5463257A | 31-10-1995 | NONE | |
| US4421452 A | 20-12-1983 | WO8100887A | 02-04-1981 |
| | | FR2466637A | 10-04-1981 |
| | | EP0038805A | 04-11-1981 |
| | | FR2424026A | 11-12-1981 |
| | | FR2573818A | 30-05-1986 |
| US4365929A | 28-12-1982 | NONE | |
| JP8232831A | 10-09-1996 | NONE | |

Form PCT / ISA 210 ( patent family annex )   (July 1992)